# EUROPEAN PATENT APPLICATION

(11) **EP 4 523 964 A1**
(43) Date of publication of application: **19.03.2025**
(21) Application number: 24198726.2
(22) Date of filing: 05.09.2024
(51) Int. Cl.: B60P 3/20, B65D 88/74, B60H 1/00, F25D 17/06

(54) **REFRIGERATED TRANSPORT CONTAINER AND REFRIGERATED TRANSPORT VEHICLE**

(30) Priority: 05.09.2023 CN 202311144427
(71) Applicant: Carrier Corporation, Palm Beach Gardens, FL 33418 (US)
(72) Inventor: JI, Junjie, Shanghai 201206 (CN); GE, Yuequn, Shanghai 201821 (CN)
(74) Representative: Dehns

(57) **Abstract**

This invention provides a refrigerated transport container (1) and a refrigerated transport vehicle. The refrigerated transport container (1) includes: a door body (2) disposed on a rear wall of the refrigerated transport container (1); an air duct (3) disposed on a top wall (11) of the refrigerated transport container (1) and extending in a direction towards or away from the door body (2) e.g. a direction close to or away from the door body (2); an air inlet (4) disposed at one end of the air duct (3) close to the door body (2) and configured to introduce conditioned air into the refrigerated transport container (1); and an air baffle unit (5) whose top portion is correspondingly disposed on one side of the air duct (3) close to the air inlet (4) and whose bottom portion can extend in a direction towards a bottom wall (12) of the refrigerated transport container (1) e.g. a direction close to a bottom wall (12) of the refrigerated transport container (1) .

## Description

### Technical Field

This invention relates to the field of refrigerated transport technique, and in particular to a refrigerated transport container and a refrigerated transport vehicle.

### Background Art

A refrigerated transport container can provide cold air for goods in the refrigerated transport container, so that the goods are kept at a lower-temperature state. However, in the related art, when a refrigerated transport container transports goods with high heat release characteristics, it is difficult to keep the goods at a low-temperature state.

### Summary of the Invention

Embodiments of the invention aim to provide a refrigerated transport container and a refrigerated transport vehicle, so as to at least solve or alleviate some problems existing in the related art.

According to a first aspect of the invention there is provided a refrigerated transport container including: a door body disposed on a rear wall of the refrigerated transport container; an air duct disposed on a top wall of the refrigerated transport container and extending in a direction towards or away from the door body; an air inlet disposed at one end of the air duct close to the door body and configured to introduce conditioned air into the refrigerated transport container; and an air baffle unit whose top portion is correspondingly disposed on one side of the air duct close to the air inlet and whose bottom portion is extendable in a direction towards a bottom wall of the refrigerated transport container.

Optionally, the direction towards or away from the door body is a direction close to or away from the door body.

Optionally, the direction towards the bottom wall is a direction close to the bottom wall.

Optionally, the top portion of the air baffle unit is an air baffle plate disposed around the air duct near the air inlet.

Optionally, the bottom portion of the air baffle unit is a curtain.

Optionally, the curtain may be coiled and stored at the top portion of the air baffle unit, and may be unfolded to extend toward the bottom wall of the refrigerated transport container.

Optionally, the air baffle unit is detachably connected to the air duct or the top wall or a side wall of the refrigerated transport container.

Optionally, the bottom portion of the air baffle unit is a baffle plate rotatably connected to the top portion of the air baffle unit.

Optionally, the top portion of the air baffle unit abuts against the top wall.

Optionally, the refrigerated transport container further includes a loading surface that allows gas to pass therethrough. Optionally, the loading surface is spaced apart from and parallel to the bottom wall of the refrigerated transport container.

Optionally, the refrigerated transport container further includes a first air return port. Optionally, the first air return port is disposed on a front wall of the refrigerated transport container opposite to the door body and is disposed adjacent to the top wall in terms of height in a vertical direction, and the first air return port is configured to allow air to flow out of the refrigerated transport container.

Optionally, the refrigerated transport container further includes a second air return port and an air return port switching device. Optionally, the second air return port is disposed on the front wall of the refrigerated transport container opposite to the door body, and is disposed adjacent to the bottom wall in terms of height in the vertical direction, and the air return port switching device is configured to alternatively open the first air return port or the second air return port.

According to a second aspect of the invention there is provided a refrigerated transport vehicle equipped with the refrigerated transport container according to the first aspect of the invention.

The refrigerated transport container and the refrigerated transport vehicle according to this invention can keep goods in a low-temperature state when the refrigerated transport container transports goods with high heat release characteristics.

### Descriptions of the Drawings

Certain exemplary embodiments will now be described in greater detail by way of example only and with reference to the accompanying drawings in which:
FIG. 1 is a schematic structural diagram showing a refrigerated transport container and a refrigerated transport vehicle, and a schematic diagram of a cold air flow direction in the refrigerated transport container when transporting goods with high heat release characteristics;
FIG. 2 is a schematic diagram showing a curtain in a refrigerated transport container in a coiled and stored state;
FIG. 3 is a schematic structural diagram showing a refrigerated transport container and a refrigerated transport vehicle, and a schematic diagram of a cold air flow direction in the refrigerated transport container when transporting goods with high heat release characteristics;
FIG. 4 is a schematic structural diagram showing an air baffle unit including a baffle plate (hard plate);
FIG. 5 is a schematic structural diagram showing an air baffle unit including a curtain;
FIG. 6 is a schematic structural diagram showing a refrigerated transport container and a refrigerated transport vehicle, and a schematic diagram of a cold air flow direction in the refrigerated transport container when transporting goods with high heat release characteristics;
FIG. 7 is a schematic structural diagram showing a refrigerated transport container and a refrigerated transport vehicle, and a schematic diagram of a cold air flow direction in the refrigerated transport container when transporting goods with low heat release characteristics;
FIG. 8 is a schematic structural diagram showing a partition plate, a rotation switching member, and a sliding switching member;
FIG. 9 is a schematic diagram showing states of the partition plate, the rotation switching member, and the sliding switching member in the refrigerated transport container when a first air return port is closed and a second air return port is opened;
FIG. 10 is a schematic diagram showing states of the partition plate, the rotation switching member, and the sliding switching member in the refrigerated transport container when the second air return port is closed and the first air return port is opened; and
FIG. 11 shows a computer simulation temperature cloud diagram of a refrigerated transport container and a refrigerated transport container according to a comparative example (the refrigerated transport container in the comparative example adopts a traditional mode in which air is supplied from an upper portion and the air returns to a lower portion) when the two transport goods with high heat release characteristics.

Reference Signs List: 1: refrigerated transport container, 11: top wall, 12: bottom wall, 2: door body; 3: air duct; 4: air inlet, 5: air baffle unit, 51: air baffle plate, 52: curtain, 53: hard plate, 54: rotation shaft, 7: loading surface, 8: refrigeration device, 9: partition plate, 91: first air return port, 92: second air return port, 92a: air hole, 31: air port, 6: air return port switching device, 61: rotation switching member, 62: sliding switching member.

### Detailed Description of the Embodiments

First, it should be noted that the composition, working principle, characteristics, advantages and the like of a refrigerated transport container and a refrigerated transport vehicle according to this invention will be described below by way of example, but it should be understood that all descriptions are given for illustrative purposes only, and therefore should not be construed as any limitation to this invention.

In addition, for any single technical feature described or implied in the embodiments mentioned herein, or any single technical feature shown or implied in each figure, this invention still allows any combination or deletion between these technical features (or equivalents thereof) without any technical obstacle, thereby obtaining more other embodiments of this invention that may not be directly mentioned herein.

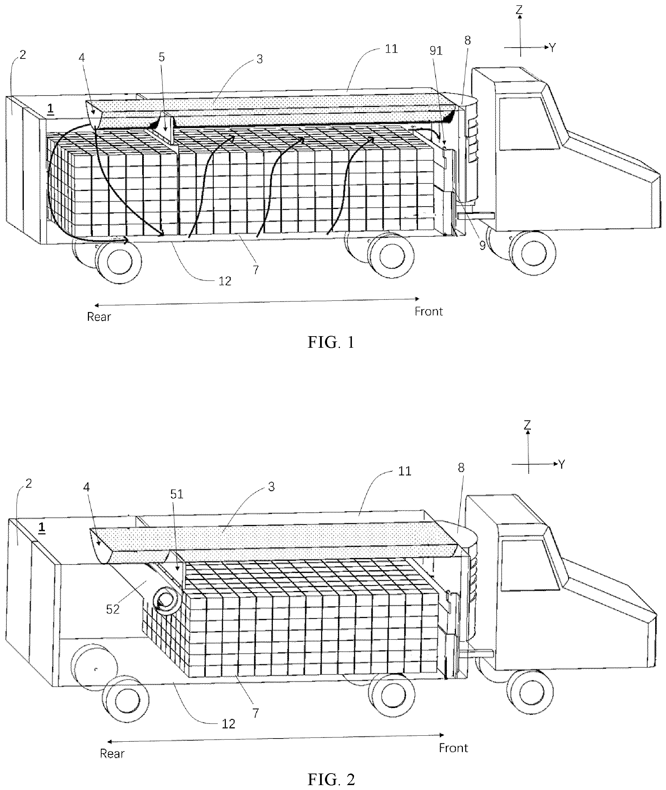

FIG. 1 shows a schematic diagram of a refrigerated transport container 1 and a refrigerated transport vehicle according to an embodiment of this invention. The refrigerated transport container 1 according to an embodiment of this invention includes: a door body 2 disposed on a rear wall of the refrigerated transport container 1; an air duct 3 disposed on a top wall 11 of the refrigerated transport container 1 and extending in a direction towards or away from the door body 2 e.g. a direction close to or away from the door body 2; an air inlet 4 disposed at one end of the air duct 3 close to the door body 2 and configured to introduce cold air into the refrigerated transport container 1; and an air baffle unit 5 whose top portion is correspondingly disposed on one side of the air duct 3 close to the air inlet 4 and whose bottom portion can extend in a direction towards a bottom wall 12 of the refrigerated transport container 1 e.g. a direction close to a bottom wall 12 of the refrigerated transport container 1.

Specifically, the refrigerated transport container 1 may be a container or a container mounted on a logistics transport tool such as a vehicle or a ship, and there is no particular limitation on the container or container as long as it can form a structure in which conditioned air circulates. In most cases, the conditioned air is cold air. In less common cases, it is necessary to introduce hot air into the box, for example, in the case where the ambient temperature is too low. The embodiment disclosed herein only takes the introduction of cold air as an example. The door body 2 is disposed on the rear wall of the refrigerated transport container 1, and the rear wall is located at one end of the refrigerated transport container 1 in a length direction (Y-axis direction). When the door body 2 is opened, goods may be carried into the refrigerated transport container 1 through the door body 2. The air duct 3 is disposed on the top wall 11 of the refrigerated transport container 1 and extends in a direction towards or away from the door body 2 (that is, a length direction of the refrigerated transport container 1; and/or a direction close to or away from the door body 2). The air duct 3 is used for conveying cold air into the refrigerated transport container 1. The air inlet 4 is disposed at one end of the air duct 3 close to the door body 2 and faces the door body 2, and is used for introducing cold air into the refrigerated transport container 1. The other end of the air duct 3 is connected to an air outlet of a refrigeration device 8.

The top portion of the air baffle unit 5 is correspondingly disposed on one side of the air duct 3 close to the air inlet 4, and the bottom portion of the air baffle unit 5 extends in the direction towards the bottom wall 12 of the refrigerated transport container 1 e.g. a direction close to the bottom wall 12 of the refrigerated transport container 1. The air baffle unit 5 may guide an airflow direction of cold air blown out from the air inlet 4, so that the cold air first passes through goods located on a rear side of the air baffle unit 5 (that is, one side of the air baffle unit 5 close to the door 2) in a top-bottom airflow direction, falls to a position close to the bottom wall 12, and then blows towards goods located on a front side of the air baffle unit 5 (that is, one side of the air baffle unit 5 away from the door body 2) in a bottom-top airflow direction. Thus, for the goods located on the front side of the air baffle unit 5, the airflow direction is a bottom-top diagonal flow direction. When the goods have high heat release characteristics, a rising airflow direction of the hot air generated due to the heat release of the goods is from bottom to top. That is to say, by providing the air baffle unit 5, the airflow direction of the cold air supplied to the goods located on the front side of the air baffle unit 5 is consistent with the rising airflow direction of the hot air generated by releasing heat from the goods itself, so as to avoid the situation in the related art that the cold air supplied from top to bottom is counteracted by the rising hot air flow, thereby facilitating better cooling of the part of goods. Meanwhile, for the goods located on the rear side of the air baffle unit 5, although the supplied cold air and the rising hot air are counteracted, a relatively good cooling effect on the goods in this area is obtained because the cold air is just conveyed out of the air duct and has a relatively low temperature and a very large speed (far larger than that of the rising airflow speed), and the airflow direction is a top-bottom diagonal flow direction. In addition, by providing the air baffle unit 5, the air flow is forced to obliquely pass through the goods located on the rear side of the air baffle unit 5, pass through the bottom portion of the air baffle unit 5, and obliquely pass through the goods located on the front side of the air baffle unit 5, so that the situation that the air "short-circuits" from the top portion of the goods and flows directly back to an air return port without passing through the goods is avoided. It can be seen that, according to the air baffle unit 5 of the embodiment of this invention, the air baffle unit 5 is simple in structure, convenient to mount and high in universality in the first aspect, and in the second aspect, the airflow direction of the supplied cold air is consistent with the rising direction of the hot air generated by the heat release of the goods, thereby improving the cooling effect on the goods, and in the third aspect, the cold air can be forced to substantially pass through all the goods, thereby keeping the goods in a relatively uniform low-temperature state.

In some embodiments, as shown in FIG. 1, FIG. 2, and FIG. 5, the top portion of the air baffle unit 5 is an air baffle plate 51 disposed around the air duct 3. A bottom portion of the air baffle unit 5 is a curtain 52. The curtain 52 may be coiled and stored at the top portion of the air baffle unit 5 and may be unfolded to extend toward the bottom wall 12 of the refrigerated transport container 1. The air baffle plate 51 may have a notch to be matched with the air duct 3, so that the air baffle plate 51 is disposed around the air duct 3 in a manner that the notch is attached to the air duct 3. In addition, the air baffle plate 51 may abut against the top wall 11 to prevent cold air from flowing to a gap between the top wall 11 and the air baffle plate 51, which is beneficial to optimize the airflow direction of the cold air in the refrigerated transport container 1. The curtain 52 may be unfolded and clamped in the middle of the goods to guide the airflow direction of the cold air blown out from the air inlet 4, so as to prevent the cold air from flowing to the gap between the air baffle plate 51 and the goods. The curtain 52 may be coiled and stored at the top portion of the air baffle unit 5 to allow the goods or personnel to enter and exit when loading and unloading the goods, or may be used when transporting goods with a low heat productivity. In other words, the air baffle unit 5 in the above-described embodiment can be coiled, and therefore, loading and unloading are not affected.

Although the air baffle unit 5 has been described in the above-described embodiment by taking the air baffle plate 51 and the curtain 52 as an example, this invention is not limited thereto. Any air baffle plate 5 falls within the scope of this invention as long as it can guide the airflow direction of the cold air blown out from the air inlet 4, and make the airflow direction on the rear side of the air baffle plate 5 substantially fall from top to bottom and the airflow direction on the front side of the air baffle plate 5 substantially raise from bottom to top. In an alternative embodiment, a shape of the air baffle unit 5, an extension length of the air baffle unit 5 on a Z-axis, an angle between an extension direction of the air baffle unit 5 and the Z-axis, and the like may be selected according to actual conditions.

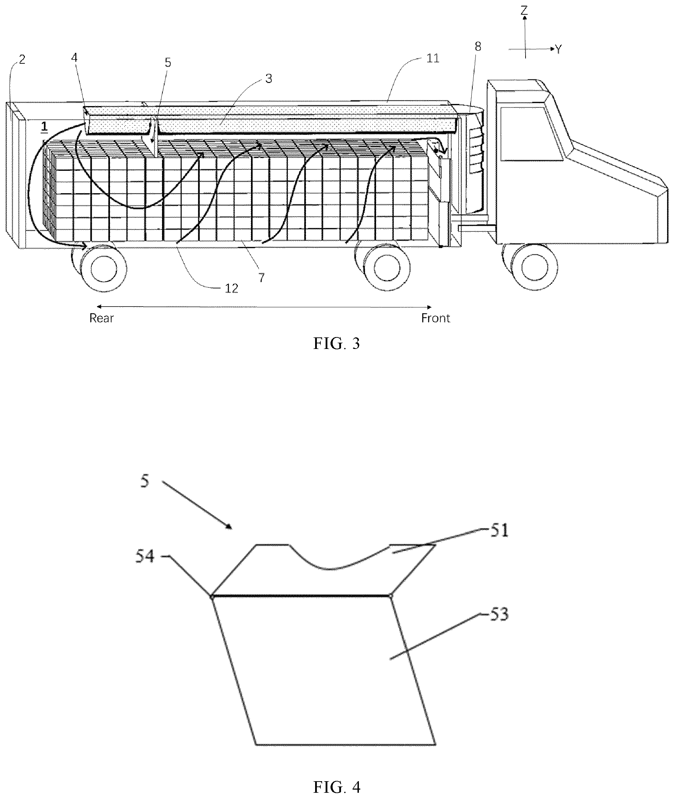

In some embodiments, as shown in FIG. 3, the air baffle unit 5 is an air baffle plate disposed around the air duct 3, and the bottom portion of the air baffle plate abuts against goods to guide the airflow direction of the cold air blown out from the air inlet 4. In the embodiment shown in FIG. 3, closely packed goods can, to a certain extent, act like the curtain 52 mentioned above.

In some embodiments, as shown in FIG. 4, the top portion of the air baffle unit 5 is an air baffle plate 51 disposed around the air duct 3 near the air inlet 4. The bottom portion of the air baffle unit 5 is a baffle plate, that is, a hard plate 53 that is rotatably connected to the top portion of the air baffle unit 5. The air baffle plate 51 and the hard plate 53 may be connected through a rotation shaft 54. The air baffle plate 5 in the above-described embodiment can be turned over, and therefore, loading and unloading are not affected.

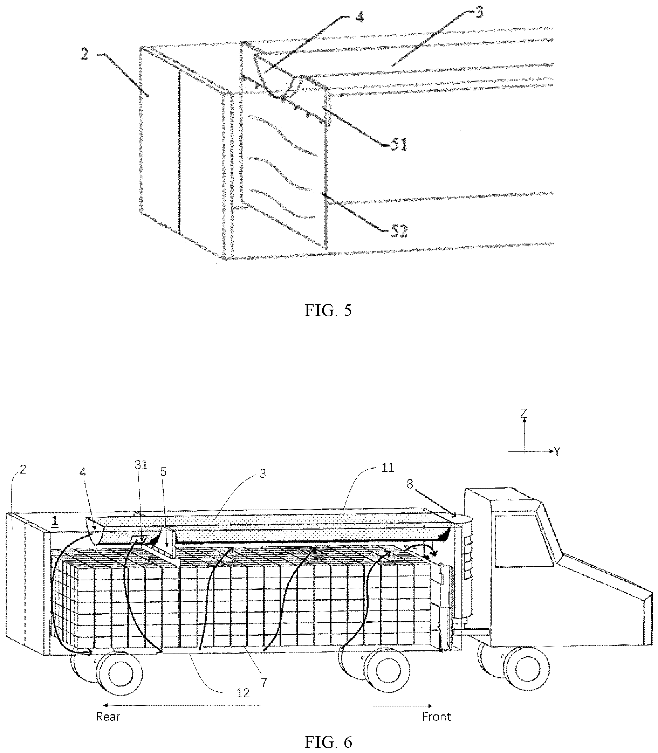

In some embodiments, as shown in FIG. 6, the air duct 3 on the rear side of the air baffle unit 5 is provided with an openable and closable air port 31, and the air port 31 may be opened or closed according to actual requirements. In a specific embodiment, opening and closing of the air port 31 are implemented by using a hook-and-loop fastener.

In some embodiments, the air baffle unit 5 is detachably connected to the air duct 3 or the top wall 11 or a side wall of the refrigerated transport container 1. Since the air baffle unit 5 is detachable, the air baffle unit 5 can be mounted or detached according to actual requirements, or a mounting position of the air baffle unit 5 can be properly adjusted. The adjustable position of the air baffle unit 5 generally ranges from a position near the air inlet 4 to a position at 1/2 the length of the refrigerated transport container. The air baffle unit 5 can be detachably connected to the air duct 3, the top wall 11 or the side wall by buckles, hooks, or the like. In some embodiments, the air baffle unit 5 is slidably connected to the air duct 3 or the top wall 11 or the side wall of the refrigerated transport container 1. For example, the air baffle unit 5 may be slidably connected to the top wall 11 by a pulley and a sliding groove, so as to adjust the mounting position of the air baffle unit 5.

In some embodiments, the refrigerated transport container 1 further includes a loading surface 7 that allows gas to pass therethrough. The loading surface 7 is spaced apart from and parallel to the bottom wall 12 of the refrigerated transport container 1. After the cold air blown from the air inlet 4 passes through the goods located on the rear side of the air baffle unit 5 in the top-bottom airflow direction and falls to the position close to the bottom wall 12, a part of the cold air flows forward through an air channel between the loading surface 7 and the bottom wall 12, and then passes through the loading surface 7 in the bottom-top airflow direction and blows towards the goods located on the front side of the air baffle unit 5. Specifically, the loading surface 7 may include structures such as a porous loading bearing plate, a porous loading bearing net, and a long strip channel steel.

In some embodiments, as shown in FIG. 1, the refrigerated transport container 1 includes a first air return port 91. The first air return port 91 is disposed on a front wall of the refrigerated transport container 1 opposite to the door body 2, and disposed adjacent to the top wall 11 or adjacent to the air duct 3 in terms of height in a vertical direction (Z-axis direction). The first air return port 91 is used for allowing air to flow out of the refrigerated transport container 1 and return to the refrigeration device 8. By disposing the first air return port 91 adjacent to the air duct 3, air passing through the goods in the bottom-top airflow direction can flow out of the refrigerated transport container 1 in a more suitable path, and a favorable diagonal flowing cold air flow is formed in the space on the front side of the air baffle unit 5. In the illustrated embodiment, the front wall includes a partition plate 9 disposed facing an air intake port of the refrigeration device 8, and a top end of the partition plate 9 and the air duct 3 define the first air return port 91. The air in the refrigerated transport container 1 flows into the air intake port of the refrigeration device 8 after passing through the first air return port 91.

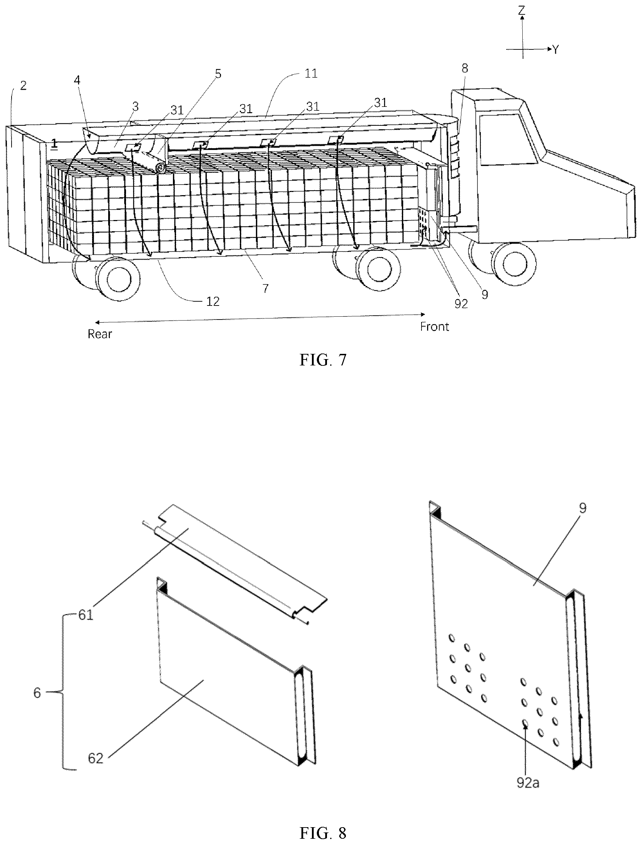

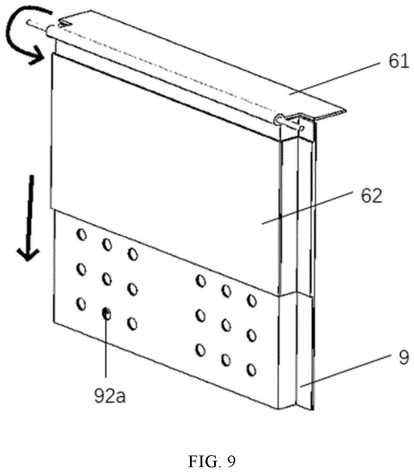

In some embodiments, as shown in FIG. 1, FIG. 7 and FIG. 8, the refrigerated transport container 1 includes the first air return port 91, a second air return port 92, and an air return port switching device 6. The first air return port 91 is disposed on the front wall of the refrigerated transport container 1 opposite to the door body 2, and disposed adjacent to the top wall 11 or adjacent to the air duct 3 in terms of height in the vertical direction. The second air return port 92 is disposed on the front wall of the refrigerated transport container 1 opposite to the door body 2, and disposed adjacent to the bottom wall 12 in terms of height in the vertical direction. The air return port switching device 6 can alternatively open the first air return port 91 or the second air return port 92. In the illustrated embodiment, the front wall includes the partition plate 9 disposed facing the air intake port of the refrigeration device 8. The top end of the partition plate 9 and the air duct 3 define the first air return port 91, a bottom end of the partition plate 9 and the bottom wall 12 define a part of the second air return port 92, and air holes 92a at the bottom portion of the partition plate 9 forms another part of the second air return port 92. When the first air return port 91 is opened, the second air return port 92 is closed, so that the air in the refrigerated transport container 1 flows into the air intake port of the refrigeration device 8 through the first air return port 91. When the second air return port 92 is opened, the first air return port 91 is closed, so that the air in the refrigerated transport container 1 flows into the air intake port of the refrigeration device 8 through the second air return port 92. In a specific embodiment, as shown in FIG. 8 to FIG. 10, the air return port switching device 6 includes a rotation switching member 61 rotatably connected to the top end of the partition plate 9, and a sliding switching member 62 slidably connected to the bottom end of the partition plate 9. The rotation switching member 61 may rotate to abut against the refrigeration device 8, or may be mounted on an outer wall of the refrigeration device 8 to close the first air return port 91. The sliding switching member 62 may slide between the bottom end of the partition plate 9 and the bottom wall 12 to close the second air return port 92. It should be noted that the partition plate 9, the rotation switching member 61, and the sliding switching member 62 herein are only one embodiment, and any switching measure is within the scope of this invention as long as it can achieve the purpose of switching between the two air return ports.

With continued reference to FIG. 1 and FIG. 7, FIG. 1 and FIG. 7 show similar structures of refrigerated transport containers 1. That is, each includes the air duct 3 disposed on the top wall 11, and one end of the air duct 3 is used for connecting an air outlet of the refrigeration device 8. However, as shown by arrows indicating airflow directions in FIG. 1 and FIG. 7, the refrigerated transport containers 1 in FIG. 1 and FIG. 7 provide two different airflow modes, and the two different airflow modes may respectively correspond to the case of transporting goods with high heat release characteristics and the case of transporting goods with low heat release characteristics.

Referring to FIG. 7, FIG. 7 corresponds to the case of transporting goods with low heat release characteristics (for example, vegetables and medicines). In this case, a plurality of air ports 31 on the air duct 3 are opened, the first air return port 91 adjacent to the top wall 11 is closed, and the second air return port 92 adjacent to the bottom wall 12 is opened. The cold air is fed into the air duct 3 through the air outlet of the refrigeration device 8, and the cold air in the air duct 3 is blown out from the plurality of air ports 31 on the air duct 3 and the air inlet 4 at an end portion of the air duct 3 and is blown towards the goods in the top-bottom airflow direction. The buoyancy of the hot air generated by the goods with a low heat productivity is very small, and therefore, the supplied cold air naturally falls through the goods, so that the goods are kept in a low-temperature state, and then the air in the refrigerated transport container 1 flows into the air intake port of the refrigeration device 8 after passing through the second air return port 92. It should be noted that, in FIG. 7, the cold air basically flows from top to bottom, and therefore, the rolling of the curtain 52 of the air baffle unit 5 will not have much influence on the descending of the cold air. Of course, if transportation of goods with a high heat productivity is not required for a long time, the air baffle unit 5 may also be detached.

Referring to FIG. 1, FIG. 1 corresponds to the case of transporting goods with high heat release characteristics (for example, durians). In this case, the plurality of air ports 31 on the air duct 3 are closed, the second air return port 92 adjacent to the bottom wall 12 is closed, and the first air return port 91 adjacent to the top wall 11 is opened. The cold air is fed into the air duct 3 through the air outlet of the refrigeration device 8. The cold air in the air duct 3 is blown out from the air inlet 4 at the end portion of the air duct 3, first passes through the goods located on the rear side of the air baffle unit 5 in the top-bottom airflow direction and falls to the position close to the bottom wall, and then is blown towards the goods located on the front side of the air baffle unit 5 in the bottom-top airflow direction. Finally, the air in the refrigerated transport container 1 flows into the air intake port of the refrigeration device 8 after passing through the first air return port 91.

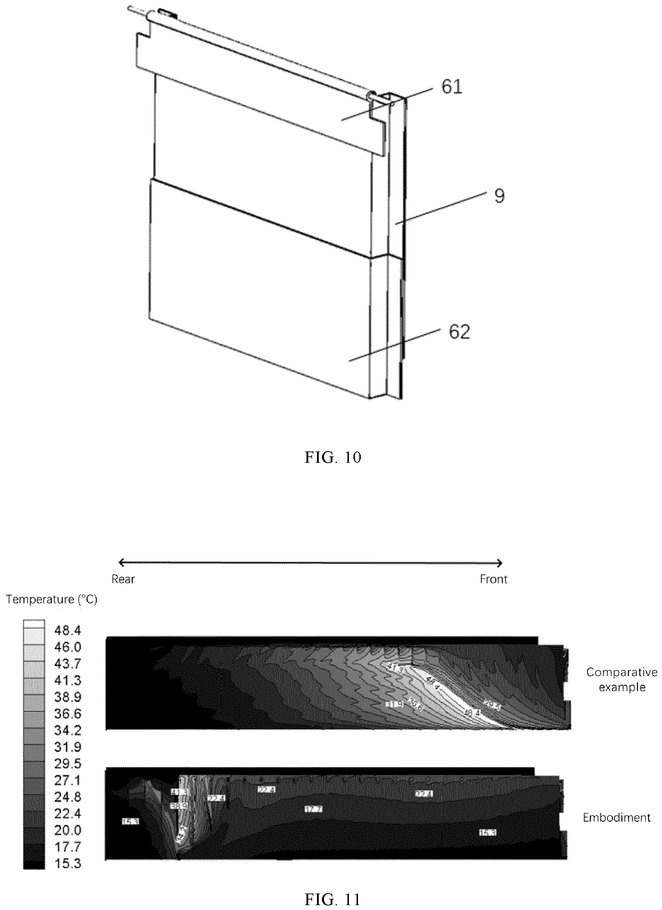

FIG. 11 shows a computer simulation temperature cloud diagram of a refrigerated transport container according to an embodiment and a refrigerated transport container according to a comparative example (that is, a traditional refrigerated transport container supplied with wind from top to bottom) when the two transport goods with high heat release characteristics.

As shown in FIG. 1, cold air is introduced into the refrigerated transport container 1 through the air inlet 4 at one end of the air duct 3 close to the door body 2, the air return port that allows the air to flow out of the refrigerated transport container 1 is disposed at a position of the front portion (i.e., one side opposite to the door body 2) of the refrigerated transport container 1, which is adjacent to the top wall 11, and the air baffle unit 5 is disposed on one side of the air duct 3 close to the air inlet 4.

In the refrigerated transport container according to the comparative example, cold air is introduced into the refrigerated transport container through an air inlet at one end of an air duct close to a door body and small openings on the air duct (i.e., in the manner shown in FIG. 7), and an air return port that allows the air to flow out of the refrigerated transport container is disposed at a position of a front portion (i.e., one side opposite to the door body) of the refrigerated transport container, which is adjacent to the bottom wall, that is, the air return port is disposed at a diagonal position relative to the air inlet of the air duct.

As shown in FIG. 11, in the refrigerated transport container in the comparative example, a larger area has a temperature of 31.9°C or higher, and the highest temperature in an area reaches 48.4°C. However, in the refrigerated transport container 1 in the embodiment, most areas have a temperature of 22.4°C or lower, and only a small part of the areas have a slightly higher temperature, which is about 34.2°C to 41.3°C. That is, when the refrigerated transport container actually transports goods with high heat release characteristics, the goods can reach a more uniform low-temperature state using the refrigerated transport container 1 in the embodiment as compared with the traditional mode according to the comparative example.

The above are only preferred embodiments of this invention and are not intended to limit this invention, and many modifications, equivalent substitutions, and improvements shall fall within the protection scope of this invention, which is as defined by the appended claims.

## Claims

1. A refrigerated transport container (1), comprising:
a door body (2) disposed on a rear wall of the refrigerated transport container;
an air duct (3) disposed on a top wall (11) of the refrigerated transport container and extending in a direction towards or away from the door body;
an air inlet (4) disposed at one end of the air duct close to the door body and configured to introduce conditioned air into the refrigerated transport container; and
an air baffle unit (5) whose top portion is correspondingly disposed on one side of the air duct close to the air inlet and whose bottom portion is extendable in a direction towards a bottom wall (12) of the refrigerated transport container.

2. The refrigerated transport container (1) according to claim 1, wherein the top portion of the air baffle unit (5) is an air baffle plate (51) disposed around the air duct (3) near the air inlet (4).

3. The refrigerated transport container (1) according to claim 1 or 2, wherein the bottom portion of the air baffle unit (5) is a curtain (52).

4. The refrigerated transport container (1) according to claim 3, wherein the curtain (52) is coiled and stored at the top portion of the air baffle unit (5), and is configured to be unfolded to extend toward the bottom wall (12) of the refrigerated transport container.

5. The refrigerated transport container (1) according to claim 1 or 2, wherein the bottom portion of the air baffle unit (5) is a baffle plate (53) rotatably connected to the top portion of the air baffle unit.

6. The refrigerated transport container (1) according to any preceding claim, wherein the air baffle unit (5) is fixedly and detachably connected to the air duct (3) or the top wall (11) or a side wall of the refrigerated transport container.

7. The refrigerated transport container (1) according to any preceding claim, wherein the top portion of the air baffle unit (5) abuts against the top wall (11).

8. The refrigerated transport container (1) according to any preceding claim, further comprising a loading surface (7) that allows gas to pass therethrough, wherein the loading surface is spaced apart from and parallel to the bottom wall (12) of the refrigerated transport container.

9. The refrigerated transport container (1) according to any preceding claim, further comprising a first air return port (91), wherein the first air return port is disposed on a front wall of the refrigerated transport container opposite to the door body (2) and is disposed adjacent to the top wall (11) in terms of height in a vertical direction, and the first air return port is configured to allow air to flow out of the refrigerated transport container.

10. The refrigerated transport container (1) according to claim 9, further comprising a second air return port (92) and an air return port switching device (6), wherein the second air return port is disposed on the front wall of the refrigerated transport container opposite to the door body (2), and is disposed adjacent to the bottom wall (12) in terms of height in the vertical direction, and the air return port switching device is configured to alternatively open the first air return port or the second air return port.

11. A refrigerated transport vehicle equipped with the refrigerated transport container (1) according to any one of claims 1 to 10.
